# FASCICULE DE BREVET EUROPEEN

(11) **EP 3 161 263 B1**
(45) Date de publication et mention de la délivrance du brevet: **29.12.2021**
(21) Numéro de dépôt: 15745523.9
(22) Date de dépôt: 24.06.2015
(51) Int. Cl.: F01D 5/08, F01D 5/30, F01D 11/00

(54) **ENSEMBLE ROTATIF POUR TURBOMACHINE**
ROTATIONAL SYSTEM OF A TURBOMACHINE
DREHBARE VORRICHTUNG EINER TURBOMASCHINE

(30) Priorité: 26.06.2014 FR 1455997
(43) Date de publication de la demande: 03.05.2017
(73) Titulaire: SAFRAN AIRCRAFT ENGINES, 75015 Paris (FR)
(72) Inventeur: BLANCHARD, Stéphane, Pierre, Guillaume, 77550 MOISSY-CRAMAYEL (FR); ITO-LARDEAU, Youki, Olivier, 77550 MOISSY-CRAMAYEL (FR)
(74) Mandataire: Ernest Gutmann - Yves Plasseraud S.A.S.
(86) Numéro de dépôt international: PCT/FR2015/051699
(87) Numéro de publication internationale: WO 2015/197980

(56) Documents cités:
- FR-A1- 2 973 433
- GB-A- 2 042 652
- US-A1- 2012 171 022

## Description

L'invention se rapporte à un ensemble rotatif pour turbomachine, telle qu'en particulier un turboréacteur d'avion, ainsi qu'à une turbomachine comprenant un tel ensemble.

Un tel ensemble, que l'on retrouve notamment dans une turbine, comprend un disque, et des aubes s'étendant radialement vers l'extérieur depuis le disque et dont les pieds sont engagés axialement dans des alvéoles de la périphérie externe du disque, et retenus radialement par des dents du disque disposées en alternance avec lesdites alvéoles. Des cavités dites de fond d'alvéole sont formées par des espaces qui sont situés radialement entre les pieds d'aubes et les fonds des alvéoles, et qui s'étendent axialement de l'amont à l'aval des alvéoles. Ces cavités de fond d'alvéoles apparaissent particulièrement en rotation, lorsque les aubes, par effets centrifuges, sont plaquées radialement vers l'extérieur contre les portées latérales des dents du disque.

Les aubes comprennent également des plates-formes internes agencées circonférentiellement bout à bout de manière à définir ensemble la limite interne du flux d'écoulement des gaz chauds circulant dans la turbine. La partie de l'aube située intérieurement par rapport à la veine, c'est-à-dire entre la plate-forme interne et le pied, est appelée échasse. Selon cette disposition, des espaces sont formés entre deux échasses adjacentes, et forment des cavités inter-échasses ou inter-aubes.

Par convention, l'amont et l'aval sont à considérer le long de l'axe X de la turbomachine suivant lequel s'écoule globalement un fluide, d'amont vers l'aval. Sera radial ce qui radial à l'axe X ; sera axial ce qui est parallèle à l'axe X. L'axe X est aussi celui de l'ensemble rotatif.

Afin d'améliorer les performances de la turbomachine, et d'éviter réchauffement du disque par le flux des gaz chauds issus d'une chambre de combustion amont et s'écoulant à travers la veine, il est important de limiter au maximum la circulation de ces gaz à travers les cavités de fonds d'alvéoles, à l'aide de moyens d'étanchéité. En effet, la partie des gaz de veine s'écoulant dans les cavités de fonds d'alvéoles ne participe pas à l'entrainement en rotation des aubes et chauffe directement le disque. Il est particulièrement avantageux d'agencer les moyens d'étanchéité à l'amont des dents du disque et des pieds d'aubes, qui empêchent le flux de veine d'atteindre les cavités de fonds d'alvéoles.

A cette fin, comme divulgué dans US 2012/171022, il est connu d'utiliser un flasque d'étanchéité, en général un anneau labyrinthe, maintenu au niveau d'une partie interne, en général une paroi annulaire radiale, entre les brides de deux disques successifs de la turbine attachant ensemble ces derniers. Les brides des disques sont classiquement portées par des parois tronconiques s'étendant radialement vers l'intérieur et axialement de part et d'autre des disques. Le flasque d'étanchéité comprend généralement des léchettes externes destinées à coopérer avec des portions de matériau abradable portées intérieurement par des rangées circonférentielles d'aubes statiques agencées à travers la veine axialement en alternance avec les aubes en rotation des disques. Le flasque d'étanchéité comprend également une à deux parois annulaires, ou bras annulaires, s'étendant extérieurement par rapport au disque, depuis la partie interne du flasque jusqu'aux dents et aux pieds d'aubes des disques respectivement amont et/ou aval. Les extrémités de ces parois annulaires sont en appui annulaire contre les faces d'extrémités axiales des dents et des pieds d'aubes des disques respectifs. Ainsi, le flasque d'étanchéité protège les disques et les cavités de fonds d'alvéoles du flux chaud de veine.

Toutefois, cette solution n'est pas optimale et présente les défauts suivants.

En pratique la longueur axiale des pieds d'aubes est différente de la longueur axiale des dents du disque. Un premier jeu axial se forme donc entre les extrémités axiales respectives des pieds d'aubes et des dents du disque, du fait à la fois des tolérances de fabrication et de l'assemblage des aubes sur le disque. De plus, en rotation, les parois annulaires du flasque d'étanchéité fléchissent radialement vers l'extérieur autour de leur point d'attache aux disques présenté ci-dessus. Les extrémités des parois annulaires du flasque s'écartent alors axialement des dents du disque et des pieds d'aubes selon un second jeu axial, lors de ce fléchissement. De l'air de veine peut donc circuler entre le flasque et l'ensemble disque/aubes, et circuler à travers les cavités de fonds d'alvéoles.

En outre, GB2042652 présente une solution proche du préambule de la revendication 1.

Mais un problème d'étanchéité des cavités de fonds d'alvéoles demeure.

Aussi, la présente invention apporte t'elle une solution simple, efficace et économique à ce problème d'étanchéité, tout en s'affranchissant des inconvénients liés aux solutions de l'art antérieur.

A cette fin, elle propose un ensemble rotatif pour turbomachine, comprenant :
- un disque ayant une périphérie externe présentant une alternance d'alvéoles et de dents s'étendant de l'amont à l'aval du disque,
- des aubes s'étendant radialement depuis le disque et dont des pieds sont engagés axialement dans les alvéoles et retenus radialement par les dents du disque,
- en amont et/ou aval du disque, un flasque annulaire d'étanchéité de cavités formées radialement entre respectivement les pieds des aubes et les fonds des alvéoles du disque, ledit flasque comprenant une partie interne retenue par le disque, et une partie externe agencée en regard axial des extrémités amont et/ou aval, respectivement, des dents du disque et des pieds d'aubes,
- un anneau intermédiaire qui est agencé axialement entre le flasque et les dents du disque, et radialement entre la partie interne et la partie externe du flasque annulaire,
- un joint d'étanchéité qui est agencé axialement entre, d'un côté, l'anneau intermédiaire et, d'un autre côté, les dents du disque et les pieds d'aubes, l'anneau intermédiaire et le joint d'étanchéité étant configurés pour assurer en rotation l'étanchéité entre, d'un côté, le flasque d'étanchéité et, d'un autre côté, les dents du disque et les pieds d'aubes,
   cet ensemble rotatif étant caractérisé en ce que le flasque d'étanchéité possède une surface tronconique interne inclinée axialement vers le disque et radialement vers l'extérieur, ladite surface tronconique interne du flasque d'étanchéité étant agencée en regard axial et radial de l'anneau intermédiaire.

Ceci peut permettre qu'en rotation l'anneau intermédiaire vienne s'appuyer sur cette surface tronconique interne du flasque d'étanchéité.

L'appui radial en rotation contre une telle surface, par effets centrifuges, est étanche, et assure une réaction mécanique qui contraint l'anneau intermédiaire axialement vers le disque.

Une telle surface tronconique interne du flasque d'étanchéité s'étendra préférentiellement jusqu'à l'extrémité axiale du flasque d'étanchéité faisant face aux dents du disque.

Pour parfaire l'étanchéité des cavités de fonds d'alvéoles, il est même recommandé:
- que- l'anneau intermédiaire soit de préférence configuré pour coopérer en rotation en appui annulaire avec le flasque de manière à alors être contraint axialement vers les extrémités amont et/ou aval, respectivement, des dents du disque et des pieds d'aubes, et/ou
- que le joint d'étanchéité soit de préférence configuré pour coopérer en rotation en appui annulaire avec l'anneau intermédiaire de manière à être alors plaqué axialement contre les extrémités amont et/ou aval, respectivement, des dents du disque et des pieds d'aubes.

Ainsi, en rotation, du fait des efforts centrifuges et de la dilatation thermique du flasque, la partie externe du flasque s'écarte axialement des dents du disque et des pieds d'aubes. Cependant, l'anneau intermédiaire s'appuie sur le flasque et plaque le joint d'étanchéité contre les dents du disque et les pieds d'aubes. Une chaîne complète d'étanchéité par contact annulaire est donc assurée entre le flasque d'un côté et les dents de disque et pieds d'aubes d'un autre côté, par l'intermédiaire de l'anneau intermédiaire et du joint d'étanchéité.

En pratique la longueur axiale des pieds d'aubes est différente de la longueur axiale des dents du disque. Un jeu axial se forme donc entre les extrémités axiales respectives des pieds d'aubes et des dents des disques, du fait à la fois des tolérances de fabrication et de l'assemblage des aubes sur le disque. Il apparait que l'invention permet d'utiliser un joint d'étanchéité classique, en métal, de diamètre assez petit pour permettre au joint de se déformer et de venir épouser l'accident de forme constitué par les extrémités axiales des dents et des pieds d'aubes, de manière à éliminer le jeu précité. Le joint d'étanchéité, afin d'assurer sa fonction dans les conditions décrites ci-dessus, doit en effet présenter un diamètre supérieur à deux fois le jeu axial total cumulé. L'étanchéité est donc bien assurée.

Avantageusement, l'anneau intermédiaire et le joint d'étanchéité sont fendus et s'ouvrent radialement, en rotation.

Ainsi, en rotation, l'anneau intermédiaire et le joint d'étanchéité s'ouvrent et s'étendent donc radialement, et assurent des appuis radiaux annulaires respectifs contre le flasque d'étanchéité et l'anneau intermédiaire, de manière à optimiser l'étanchéité entre ces pièces.

Préférentiellement, l'anneau intermédiaire possède une surface tronconique externe inclinée axialement vers le disque et radialement vers l'extérieur, et complémentaire à la surface tronconique du flasque d'étanchéité.

La complémentarité des surfaces du flasque d'étanchéité et de l'anneau intermédiaire assure un meilleur contact annulaire et une meilleure étanchéité entre ces pièces.

Avantageusement, l'anneau intermédiaire comprend une surface tronconique interne inclinée axialement vers le disque et radialement vers l'extérieur, et agencée en regard radial du joint d'étanchéité, et sur laquelle s'appuie le joint d'étanchéité en rotation. Cette surface tronconique interne s'étend préférentiellement jusqu'à l'extrémité axiale de l'anneau intermédiaire faisant face aux dents du disque.

L'appui radial contre une telle surface est étanche et assure une réaction mécanique qui plaque le joint d'étanchéité axialement contre les dents du disque et les pieds d'aubes.

Selon une autre caractéristique présentant un intérêt, le joint d'étanchéité est agencé dans une gorge annulaire aval de l'anneau intermédiaire. Cette gorge annulaire comprend alors ladite paroi tronconique interne de l'anneau intermédiaire.

Cette gorge assure le maintien du joint d'étanchéité dans toutes les conditions de fonctionnement de l'ensemble.

Dans une réalisation préférée, le joint d'étanchéité possède un diamètre compris entre 0,6 et 1,2 mm, et de préférence entre 0,8 et 1 mm. Le joint peut en particulier être métallique dans ces conditions.

Ce diamètre est adapté pour permettre à un joint métallique de se déformer et d'épouser les irrégularités formées par les extrémités des dents du disque et des pieds d'aubes. L'étanchéité est donc optimale.

Pour une meilleure étanchéité, le joint peut être creux. Cette forme couplée à une dimension adaptée permet une meilleure étanchéité car elle autorise une déformation qui épouse au plus près les surfaces des dents du disque et des pieds d'aubes.

Afin d'assurer un fonctionnement optimal, le jeu maximal, entre les extrémités axiales des pieds d'aubes et des dents du disque, doit être inférieur à l'épaisseur du joint creux écrasé. A cet effet, on pourra utiliser un joint creux de diamètre total d'environ 1 mm, avec une partie creuse centrale de diamètre d'environ 0,8 mm.

Préférentiellement, l'anneau intermédiaire et le joint d'étanchéité sont agencés intégralement extérieurement aux cavités de fonds d'alvéoles.

Selon une forme particulière de réalisation, la partie interne du flasque d'étanchéité est agencée plus en amont et/ou en aval, respectivement, que la partie externe du flasque d'étanchéité.

Par ailleurs, avec un anneau intermédiaire fendu, on pourra prévoir afin d'en assurer le blocage en rotation par rapport au flasque d'étanchéité et/ou au disque, que soit prévu un élément de blocage en rotation de l'anneau intermédiaire autour dudit axe (X), cet élément se présentant de préférence comme une portion en saillie d'une extrémité de ladite partie externe du flasque d'étanchéité et/ou comme une portion en saillie axiale depuis une paroi radiale amont du disque, ladite portion en saillie étant logée dans la fente de l'anneau intermédiaire.

L'invention concerne également une turbine de turbomachine comprenant un ensemble rotatif tel que décrit dans la présente demande de brevet.

L'invention concerne enfin une turbomachine, telle qu'un turboréacteur ou un turbopropulseur, comprenant un ensemble rotatif tel que décrit dans la présente demande de brevet.

D'autres avantages et caractéristiques de l'invention apparaîtront à la lecture de la description suivante faite à titre d'exemple non limitatif et en référence aux dessins annexés dans lesquels :
- la figure 1 est une vue schématique partielle en coupe axiale d'une turbine basse-pression de turbomachine selon l'art antérieur ;
- la figure 2 est une vue schématique partielle en coupe axiale d'un étage rotatif de la turbine selon l'art antérieur, en fonctionnement ;
- la figure 3 est une vue schématique en coupe axiale d'un ensemble rotatif selon l'invention ;
- la figure 4 est une vue schématique en coupe axiale d'un ensemble rotatif selon l'invention, en fonctionnement,
- la figure 5 montre en particulier la réalisation en structures fendues de l'anneau intermédiaire et du joint d'étanchéité, et
- la figure 6 est un détail modifié de la zone VI de la figure 4, sans aube, en coupe axiale.

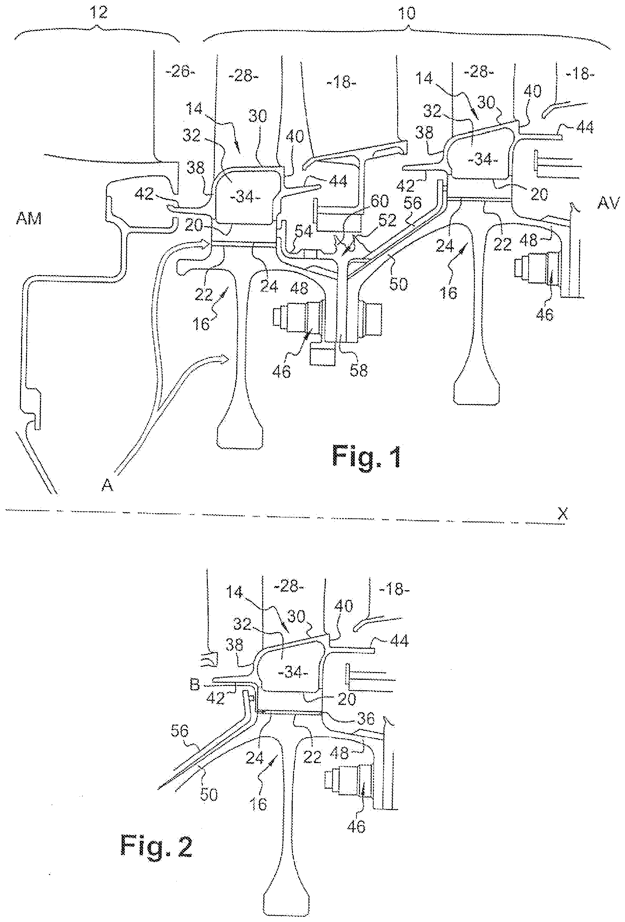

On se réfère tout d'abord aux figures 1 et 2 qui représentent une turbine basse pression 10 selon la technique antérieure, agencée en aval d'une turbine haute pression 12. La turbine basse pression 10 comprend une alternance axiale d'étages de rangées annulaires d'aubes fixes 18, appelées distributeurs, et d'étage de disques rotatifs 16 comportant à leurs périphéries une pluralité d'aubes 14, ces étages étant agencés autour d'un axe X de la turbomachine.

Dans le présent document, tout comme dans le domaine technique concerné, les termes amont AM et aval AV sont définis de sorte que l'amont se trouve axialement du côté d'où provient le flux d'écoulement général de la turbomachine, et l'aval se trouve axialement du côté vers lequel s'écoule ce même flux.

Chaque disque 16 comprend à sa périphérie externe des dents (dont le sommet est référencé 20) disposées en alternance avec des alvéoles (dont le fond est référencé 22) dans lesquelles sont engagés axialement et retenus radialement des pieds d'aubes (dont l'extrémité interne est référencée 24), ces aubes 14 s'étendant radialement depuis les alvéoles 22 dans une veine annulaire d'écoulement 26 d'un flux de gaz chaud issu d'une chambre de combustion amont (non représenté).

Plus particulièrement, chaque aube comprend radialement depuis l'extérieur vers l'intérieur une pale 28, une plate-forme 30 s'étendant sensiblement perpendiculairement par rapport à l'axe d'allongement de l'aube 14, et une échasse 32 reliant la plate-forme au pied d'aube 24. Les pieds d'aube 24 ont une forme par exemple en queue d'aronde ou analogue pour assurer leur retenue radiale dans les alvéoles 22. Les plates-formes 30 des aubes sont agencées circonférentiellement bout à bout de manière à définir ensemble la limite interne idéale du flux d'écoulement des gaz chauds circulant dans la turbine. Selon cette disposition, des espaces sont formés entre deux échasses 32 circonférentiellement adjacentes, dans la zone annulaire s'étendant radialement depuis les plates-formes 30 jusqu'au disque 16, et sont appelés des cavités inter-échasses ou inter-aubes 34. Des cavités dites de fonds d'alvéoles 36 sont également formées par des espaces radiaux séparant les pieds d'aubes 24 des fonds 22 des alvéoles, et débouchent en amont et en aval des disques 16. Des parois 38, 40 s'étendent radialement vers l'intérieur depuis l'amont et l'aval des plates-formes jusqu'aux pieds 24 des aubes et forment des moyens d'étanchéité axiale de la zone annulaire s'étendant radialement depuis les plates-formes 30 jusqu'au disque 16, et donc des cavités inter-aubes 34, en assurant leur obturation.

La paroi radiale amont 38 de la plate-forme est reliée à un becquet 42 s'étendant vers l'amont et la paroi radiale aval 40 est reliée à un becquet 44 s'étendant vers l'aval. Les becquets 42, 44 s'étendent axialement entre les étages consécutifs de la turbine afin de conserver en partie l'intégrité structurelle de la veine 26 entre chaque étage de turbine, ce qui limite la circulation de gaz chauds radialement vers l'intérieur de la turbine.

Les disques sont fixés les uns aux autres par boulonnage, en 46, de brides annulaires 48, 50 s'étendant axialement les unes en direction des autres depuis chaque disque. Un anneau labyrinthe 52, aussi appelé flasque d'étanchéité, est également positionné axialement entre chaque couple de disques 16 adjacents et comprend dans une partie externe deux parois annulaires, ou bras annulaires amont et aval 54, 56 s'étendant axialement jusqu'à ces disques. Les extrémités des bras annulaires sont positionnées en appui annulaire axial contre les dents des disques et les pieds d'aubes, extérieurement aux cavités de fonds d'alvéoles, pour empêcher les gaz de veine de circuler radialement vers l'intérieur le long des dents des disques, et d'atteindre ainsi les cavités de fonds d'alvéoles. Les brides de fixation 48, 50 entre les disques sont ainsi également protégées des gaz de veine par les bras 54, 56 de l'anneau labyrinthe 52 qui les recouvrent extérieurement. L'anneau labyrinthe 52 comprend en outre dans une partie interne une paroi annulaire radiale interne 58 de fixation au boulonnage 46 des brides 48, 50 des disques, et coopère par des léchettes 60 annulaires externes avec les extrémités internes des aubes 18 des distributeurs, afin de limiter la circulation axiale des gaz de veine intérieurement par rapport à ces aubes 18.

Afin d'assurer le bon fonctionnement de la turbomachine, un air de refroidissement A est prélevé, dans un compresseur basse-pression ou haute-pression par exemple, et acheminé par la partie interne de la turbine, vers l'espace annulaire formé radialement entre d'une part les brides 48, 50 du disque et d'autre part les bras 54, 56 des anneaux labyrinthes, jusqu'aux cavités de fond d'alvéole 36 afin d'assurer le refroidissement du disque 16 et de protéger ce dernier de réchauffement provoqué par les gaz chauds du flux de veine 26. Afin d'autoriser la circulation de l'air de refroidissement A en aval des cavités 36 de fond d'alvéole, ces dernières débouchent en aval intérieurement par rapport au bras 54 de l'anneau labyrinthe 52 en appui axial sur le disque 16. Cette configuration permet à l'air de refroidissement A de circuler plus en aval radialement entre l'anneau labyrinthe 52 et les brides 48, 50 de fixation entre les disques 16, afin d'en assurer également le refroidissement.

En fonctionnement, comme illustré en figure 2 et expliqué plus haut dans ce document, les bras annulaires 54, 56 des anneaux labyrinthes 52 fléchissent vers l'extérieur et s'écartent axialement des dents 20 des disques et des pieds d'aubes 24, ce qui permet aux gaz chauds de la veine de circuler radialement vers l'intérieur le long des faces amont et aval des dents 20 des disques, et d'atteindre le disque 16 et les cavités de fonds d'alvéoles 36. L'art antérieur, afin de limiter ce phénomène, peut former des crochets annulaires (non représentés) en amont et en aval des échasses, qui servent à maintenir axialement les extrémités des bras de l'anneau labyrinthe au voisinage des dents des disques, en empêchant ces extrémités de trop s'écarter des disques. Cependant, cette solution ne fait que limiter le problème, et ne le supprime pas.

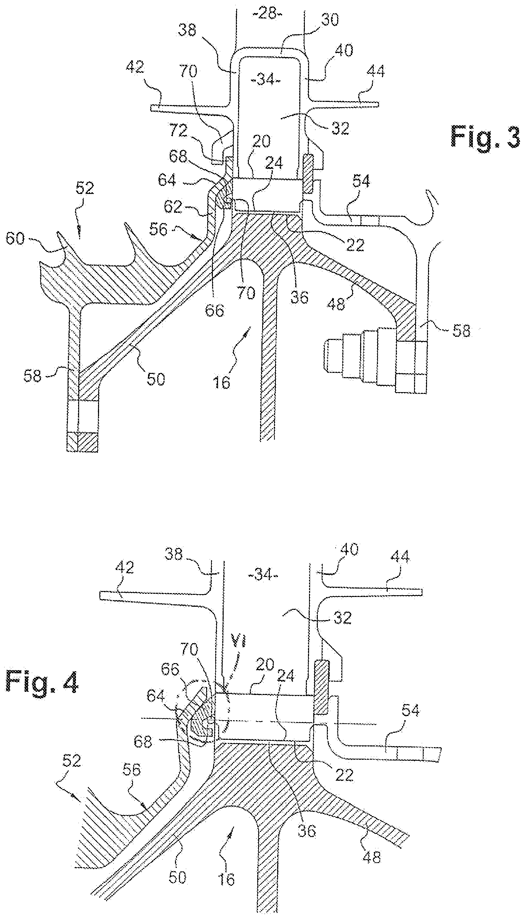

La solution proposée, d'après les caractéristiques évoquées plus haut dans la présente demande, est représentée dans les figures 3 et 4.

Dans la réalisation représentée, on forme les moyens d'étanchéité selon l'invention à l'amont des cavités de fonds d'alvéoles. De manière équivalente et symétrique, il est possible de placer ces moyens d'étanchéité à l'aval de ces cavités.

Ainsi, en se référant à la figure 3, l'extrémité aval du bras aval 56 de l'anneau labyrinthe 52 comprend une paroi radiale 62 prolongée à l'extérieur par une paroi tronconique 64 inclinée radialement vers l'extérieur et axialement vers l'aval, et dont l'extrémité annulaire externe est, au repos, en contact avec les faces d'extrémités amont des dents 20 du disque et des pieds d'aubes 24, en faisant abstraction du jeu d'alignement entre ces dernières pièces. Ce contact s'effectue plus particulièrement au niveau radial de l'extrémité externe des dents 20 du disque.

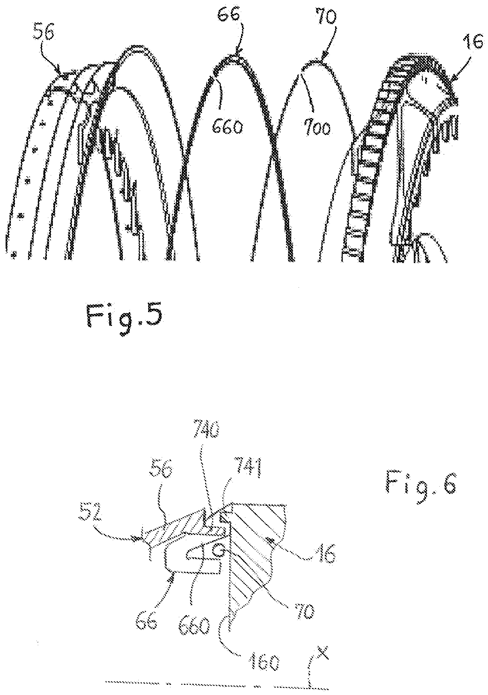

Un anneau intermédiaire 66, de préférence fendu (fente 660 figure 5), est agencé axialement entre l'extrémité aval du bras aval 56 de l'anneau labyrinthe 52 et les dents 20 du disque. Il sera favorablement, dimensionné pour être au contact avec ces dernières au repos. Cet anneau intermédiaire comprend des surfaces amont et externes de formes complémentaires à l'extrémité aval 62, 64 du bras aval 56 de l'anneau labyrinthe, c'est-à-dire respectivement radiale et tronconique inclinée radialement vers l'extérieur et axialement vers l'aval. La face aval de l'anneau intermédiaire 66 est plane radialement, pour assurer un bon appui axial contre les dents 20 du disque et les pieds d'aubes 24, et possède une gorge 68 axiale annulaire de surface externe tronconique inclinée vers l'aval et l'extérieur. L'extrémité interne de l'anneau intermédiaire 66 se situe quant à elle toujours radialement à l'extérieur des cavités de fonds d'alvéoles 36.

Grâce à la complémentarité de forme, le contact est optimal entre l'anneau intermédiaire 66 et le bras 56 de l'anneau labyrinthe 52, ce qui assure une bonne étanchéité entre ces deux pièces. De plus, en rotation, l'anneau intermédiaire 66 tend à s'ouvrir radialement, du fait des efforts centrifuges, ce qui par réaction mécanique d'appui radial contre la paroi tronconique 64 du bras 56 contraint l'anneau intermédiaire 66 axialement vers les dents 20 du disque.

Avantageusement, on pourra prévoir un élément 74 de blocage en rotation de l'anneau intermédiaire. Cet élément de blocage en rotation pourra, comme schématisé figure 6, prendre la forme d'une portion 740 en saillie de l'extrémité du bras 56 de l'anneau labyrinthe 52 et/ou celle d'une portion 741 en saillie axiale depuis la paroi radiale amont 160 du disque 16. Cet élément en saillie sera favorablement logé dans la fente 660 de l'anneau intermédiaire, afin d'assurer le blocage en rotation de l'anneau intermédiaire par rapport à l'anneau labyrinthe et au disque.

Dans la gorge 68 de l'anneau intermédiaire est agencé un joint d'étanchéité 70 (voir figures 3,4), de préférence fendu (fente 700 figure 5). Le joint 70 sera favorablement de diamètre compris entre 0,6 et 1,2 mm, et de préférence entre 0,8 et 1 mm. Ce joint d'étanchéité 68 peut être creux et également adapté dans un autre type de matériau. Le joint 70 sera a priori métallique.

Comme illustré à la figure 4, en fonctionnement, identiquement à l'art antérieur, le bras 56 de l'anneau labyrinthe 52 fléchit et s'écarte axialement des dents 20 du disque. Cependant, la réaction mécanique d'appui radial entre l'anneau intermédiaire 66 et la paroi tronconique 64 du bras 56 a toujours lieu, et fait glisser à étanchéité l'anneau intermédiaire 66 le long de la paroi tronconique 64 du bras, vers l'aval, de manière à rester axialement contre les dents 20 du disque, la gorge 68 en regard des dents 20 du disque et des pieds d'aubes 24.

En fonctionnement, le joint d'étanchéité 70 s'ouvre et, par réaction mécanique d'appui radial contre la paroi tronconique externe de la gorge 68 de l'anneau intermédiaire 66, plaque le joint d'étanchéité 70 axialement contre les dents 20 du disque et les pieds d'aubes 24. Le joint 70 s'appuie donc à la fois annulairement d'une part contre l'anneau intermédiaire 66 et d'autre part contre les dents 20 du disque et les pieds d'aubes 24, et assure donc l'étanchéité entre ces deux pièces.

Le joint d'étanchéité 70 peut donc assurer le même rôle et possède la même efficacité dans la gorge 68, que le bras 56 de l'anneau labyrinthe soit fléchi ou non. De plus l'étanchéité bras / anneau intermédiaire, anneau intermédiaire / joint d'étanchéité et joint d'étanchéité / dents du disque et pieds d'aubes, est assurée dans toutes les conditions de fonctionnement.

Comme pour l'art antérieur, un crochet 72 annulaire vers l'amont et l'intérieur peut être formé sur la paroi radiale amont 38 de la plateforme, autour d'un rebord radial 72 formé à l'extrémité du bras 56 de l'anneau labyrinthe 52. Ce crochet empêche le bras 56 de trop s'écarter axialement vers l'amont lors de son fléchissement en rotation.

## Revendications

1. Ensemble rotatif pour turbomachine présentant un axe (X) et comprenant :
- un disque (16) ayant une périphérie externe présentant une alternance d'alvéoles (22) et de dents (20) s'étendant de l'amont à l'aval du disque,
- des aubes (14) s'étendant radialement depuis le disque (16) et dont des pieds (24) sont engagés axialement dans les alvéoles (22) et retenus radialement par les dents du disque,
- en amont et/ou aval du disque, un flasque (52) annulaire d'étanchéité de cavités (36) formées radialement entre respectivement les pieds des aubes et les fonds des alvéoles du disque, ledit flasque comprenant une partie interne (58) retenue par le disque, et une partie externe (56) agencée en regard axial des extrémités amont et/ou aval, respectivement, des dents du disque et des pieds d'aubes,
- un anneau intermédiaire (66) qui est agencé axialement entre le flasque (52) et les dents (20) du disque, et radialement entre la partie interne et la partie externe (56) du flasque d'étanchéité (52),
- un joint d'étanchéité (70) qui est agencé axialement entre, d'un côté, l'anneau intermédiaire (66) et, d'un autre côté, les dents (20) du disque et les pieds d'aubes (24), l'anneau intermédiaire (66) et le joint d'étanchéité (70) sont configurés pour assurer en rotation l'étanchéité entre, d'un côté, le flasque d'étanchéité (52) et, d'un autre côté, les dents (20) du disque et les pieds (24) d'aubes, et
**caractérisé en ce que** le flasque d'étanchéité (52) possède une surface tronconique interne (64) inclinée axialement vers le disque (16) et radialement vers l'extérieur, ladite surface tronconique interne (64) étant agencée en regard axial et radial de l'anneau intermédiaire (66).

2. Ensemble rotatif selon la revendication 1, **caractérisé en ce que** l'anneau intermédiaire (66) et le joint d'étanchéité (70) sont fendus et s'ouvrent radialement en rotation.

3. Ensemble rotatif selon la revendication 1 ou 2, **caractérisé en ce que** l'anneau intermédiaire (66) possède une surface tronconique externe inclinée axialement vers le disque et radialement vers l'extérieur, et complémentaire à la surface tronconique (64) du flasque d'étanchéité (52).

4. Ensemble rotatif selon l'une des revendications précédentes, **caractérisé en ce que** l'anneau intermédiaire (66) comprend une surface tronconique interne inclinée axialement vers le disque et radialement vers l'extérieur, et agencée en regard radial du joint d'étanchéité (70).

5. Ensemble rotatif selon l'une des revendications précédentes, **caractérisé en ce que** le joint d'étanchéité (70) est agencé dans une gorge annulaire (68) aval de l'anneau intermédiaire (66).

6. Ensemble rotatif selon l'une des revendications précédentes, **caractérisé en ce que** le joint d'étanchéité (70) possède un diamètre compris entre 0,6 et 1,2 mm.

7. Ensemble rotatif selon l'une des revendications précédentes, **caractérisé en ce que** l'anneau intermédiaire (66) et le joint d'étanchéité (70) sont agencés intégralement extérieurement aux cavités de fonds d'alvéoles (36).

8. Ensemble rotatif selon l'une des revendications précédentes, **caractérisé en ce que** l'anneau intermédiaire (66) est configuré pour coopérer, en rotation, en appui annulaire avec le flasque (52) de manière à être alors contraint axialement vers les extrémités amont et/ou aval, respectivement, des dents (20) du disque et des pieds (24) d'aubes.

9. Ensemble rotatif selon l'une des revendications précédentes, **caractérisé en ce que** le joint d'étanchéité (70) est configuré pour coopérer, en rotation, en appui annulaire avec l'anneau intermédiaire (66) de manière à être plaqué alors axialement contre les extrémités amont et/ou aval, respectivement, des dents (20) du disque et des pieds (24) d'aubes.

10. Ensemble rotatif selon la revendication 2, seule ou en combinaison avec l'une des revendications 3 à 7, qui comprend un élément (74) de blocage en rotation de l'anneau intermédiaire autour dudit axe (X).

11. Ensemble rotatif selon la revendication 10, dans lequel ledit élément (74) de blocage se présente :
- comme une portion en saillie d'une extrémité de ladite partie externe (56) du flasque d'étanchéité (52) ou
- comme une portion en saillie axiale depuis une paroi radiale amont (160) du disque (16), ladite portion en saillie étant logée dans la fente (660) de l'anneau intermédiaire afin d'assurer le blocage en rotation de l'anneau par rapport au flasque d'étanchéité (52) et au disque.

12. Turbine de turbomachine, **caractérisée en ce qu'**elle comprend un ensemble rotatif selon l'une des revendications précédentes.

13. Turbomachine, telle qu'un turboréacteur ou un turbopropulseur, **caractérisée en ce qu'**elle comprend un ensemble rotatif selon l'une des revendications 1 à 11.

## Patentansprüche

1. Drehanordnung für eine Turbomaschine mit einer Achse (X), die folgendes umfasst:
- eine Scheibe (16) mit einem Außenumfang, der abwechselnd Vertiefungen (22) und Zähne (20) aufweist, die sich von stromaufwärts nach stromabwärts der Scheibe erstrecken,
- Schaufeln (14), die sich von der Scheibe (16) aus radial erstrecken und deren Füße (24) axial in die Vertiefungen (22) eingreifen und radial von den Zähnen der Scheibe gehalten werden,
- stromaufwärts und/oder stromabwärts der Scheibe ein ringförmiger Flansch (52) zur Abdichtung von Hohlräumen (36), die radial jeweils zwischen den Füßen der Schaufeln und den Böden der Vertiefungen der Scheibe ausgebildet sind, wobei der Flansch einen inneren Teil (58) umfasst, der von der Scheibe gehalten wird, und einen äußeren Teil (56), der axial gegenüber den stromaufwärtigen und/oder stromabwärtigen Enden bzw. der Zähne der Scheibe und der Schaufelfüße angeordnet ist,
- einen Zwischenring (66), der axial zwischen dem Flansch (52) und den Zähnen (20) der Scheibe, und radial zwischen dem inneren Teil und dem äußeren Teil (56) des Dichtungsflansches (52) angeordnet ist,
- eine Dichtung (70), die axial zwischen einerseits dem Zwischenring (66) und andererseits den Zähnen (20) der Scheibe und den Schaufelfüßen (24) angeordnet ist, wobei der Zwischenring (66) und die Dichtung (70) so ausgebildet sind, dass sie beim Drehen die Dichtheit zwischen dem Dichtungsflansch (52) einerseits und den Zähnen (20) der Scheibe und den Schaufelfüßen (24) andererseits gewährleisten, **dadurch gekennzeichnet, dass** der Dichtungsflansch (52) eine kegelstumpfförmige Innenfläche (64) aufweist, die axial zur Scheibe (16) und radial nach außen geneigt ist, wobei die kegelstumpfförmige Innenfläche (64) axial und radial gegenüber dem Zwischenring (66) angeordnet ist.

2. Drehanordnung nach Anspruch 1, **dadurch gekennzeichnet, dass** der Zwischenring (66) und die Dichtung (70) geschlitzt sind und sich radial drehend öffnen.

3. Drehanordnung nach Anspruch 1 oder 2, **dadurch gekennzeichnet, dass** der Zwischenring (66) eine kegelstumpfförmige Außenfläche aufweist, die axial zur Scheibe, radial nach außen geneigt und komplementär zur kegelstumpfförmigen Fläche (64) des Dichtungsflansches (52) ist.

4. Drehanordnung nach einem der vorhergehenden Ansprüche, **dadurch gekennzeichnet, dass** der Zwischenring (66) eine kegelstumpfförmige Innenfläche umfasst, die axial zur Scheibe, radial nach außen geneigt und radial gegenüber der Dichtung (70) angeordnet ist.

5. Drehanordnung nach einem der vorhergehenden Ansprüche, **dadurch gekennzeichnet, dass** die Dichtung (70) in einer Ringnut (68) stromabwärtig hinter dem Zwischenring (66) angeordnet ist.

6. Drehanordnung nach einem der vorhergehenden Ansprüche, **dadurch gekennzeichnet, dass** die Dichtung (70) einen Durchmesser zwischen 0,6 und 1,2 mm aufweist.

7. Drehanordnung nach einem der vorhergehenden Ansprüche, **dadurch gekennzeichnet, dass** der Zwischenring (66) und die Dichtung (70) komplett außerhalb der Hohlräume der Vertiefungsböden (36) angeordnet sind.

8. Drehanordnung nach einem der vorhergehenden Ansprüche, **dadurch gekennzeichnet, dass** der Zwischenring (66) so ausgebildet ist, dass er während der Drehung in ringförmiger Anlage mit dem Flansch (52) zusammenwirkt und somit axial in Richtung der stromaufwärtigen und/oder stromabwärtigen Enden bzw. der Zähne (20) der Scheibe und der Schaufelfüße (24) beansprucht wird.

9. Drehanordnung nach einem der vorhergehenden Ansprüche, **dadurch gekennzeichnet, dass** die Dichtung (70) so ausgebildet ist, dass sie während der Drehung in ringförmiger Anlage mit dem Zwischenring (66) zusammenwirkt und somit axial gegen die stromaufwärtigen und/oder stromabwärtigen Enden bzw. die Zähne (20) der Scheibe und die Schaufelfüße (24) gedrückt wird.

10. Drehanordnung ausschließlich nach Anspruch 2 oder in Kombination mit einem der Ansprüche 3 bis 7, die ein Element (74) zur Blockierung der Drehung des Zwischenrings um die Achse (X) umfasst.

11. Drehanordnung nach Anspruch 10, in der das Blockierelement (74):
- ein Abschnitt sein kann, der von einem Ende des äußeren Teils (56) des Dichtungsflansches (52) vorsteht, oder
- ein Abschnitt sein kann, der von einer stromaufwärtigen radialen Wand (160) der Scheibe (16) axial vorsteht, wobei der vorstehende Abschnitt im Schlitz (660) des Zwischenrings aufgenommen ist, um die Drehung des Rings in Bezug auf den Dichtungsflansch (52) und die Scheibe zu blockieren.

12. Turbine für eine Turbomaschine, **dadurch gekennzeichnet, dass** sie eine Drehanordnung nach einem der vorhergehenden Ansprüche umfasst.

13. Turbomaschine, wie z.B. ein Turbostrahltriebwerk oder ein Turboprop-Triebwerk, **dadurch gekennzeichnet, dass** sie eine Drehanordnung nach einem der Ansprüche 1 bis 11 umfasst.

## Claims

1. A rotary assembly for a turbomachine having an axis (X) and comprising:
- a disk (16) having an external periphery exhibiting an alternation of pockets (22) and of teeth (20), which extend from upstream to downstream on the disk,
- vanes (14) extending radially from the disk (16), and the roots (24) of which are engaged axially in the pockets (22) and retained radially by the teeth of the disk,
- arranged upstream and/or downstream from the disk, an annular flange (52) sealing cavities (36) formed radially between, respectively, the roots of the vanes and the bottoms of the pockets of the disk, with said flange comprising an internal part (58) retained by the disk, and an external part (56) arranged axially facing upstream and/or downstream ends, respectively, of the teeth of the disk and of the roots of the vanes,
- an intermediate ring (66) which is arranged axially between the flange (52) and the teeth (20) of the disk, and radially between the internal part and the external part (56) of the disk,
- a seal (70) which is arranged axially between, on the one side, the intermediate ring (66) and, on the other side, the teeth (20) of the disk and the roots of the vanes (24), with the intermediate ring and the sealing flange being so configured as to provide, in rotation, the sealing between, on the one side, the sealing flange (52) and, on the other side, the teeth of the disk and of the roots of the vanes
**characterized in that** the sealing flange (52) has an internal frustoconical surface (64) inclined axially towards the disk and radially outwards, said internal frustoconical surface (64) being arranged axially and radially facing the intermediate ring (66).

2. The rotary assembly according to claim 1, **characterized in that** the intermediate ring (66) and the seal (70) are slit and open radially in rotation.

3. The rotary assembly according to claim 1 or 2, **characterized in that** the intermediate ring (66) has an external frustoconical surface inclined axially towards the disk and radially outwards, and matching the frustoconical surface (64) of the sealing flange (52).

4. The rotary assembly according to one of the preceding claims, **characterized in that** the intermediate ring (66) comprises an internal frustoconical surface inclined axially towards the disk and radially outwards and arranged radially facing the seal (70).

5. The rotary assembly according to one of the preceding claims, **characterized in that** the seal (70) is arranged in an annular groove (68) downstream of the intermediate ring (66).

6. The rotary assembly according to one of the preceding claims, **characterized in that** the seal (70) has a diameter between 0.6 and 1.2mm.

7. The rotary assembly according to one of the preceding claims, **characterized in that** the intermediate ring (66) and the seal (70) are arranged entirely outside the pocket bottom cavities (36).

8. The rotary assembly according to one of the preceding claims, **characterized in that** the intermediate ring (66) is so configured as to cooperate, in rotation, in annular support with the flange (52) so as to be then axially forced toward the upstream and/or downstream ends, respectively, of the teeth (20) of the disk and the roots (24) of the vanes.

9. The rotary assembly according to one of the preceding claims, **characterized in that** the seal (70) is so configured as to cooperate, in rotation, in annular support with the intermediate ring (66) so as then to be axially pressed against the upstream and/or downstream ends, respectively, of the teeth (20) of the disk and the roots (24) of the vanes.

10. The rotary assembly according to claim 2, alone or in combination with one of claims 3 to 7, which comprises an element (74) for locking in rotation the intermediate ring about said axis (X).

11. The rotary assembly according to claim with said element (74) :
- is formed as a portion projecting from one end of said external portion (56) of the sealing flange (52), or
- as a portion axially projecting from an upstream radial wall (160) of the disk (16), with said projecting portion being received in the slot (660) of the intermediate ring to ensure the locking in rotation of the ring relative to the sealing flange (52) and to the disk.

12. A turbine for a turbomachine, **characterized in that** it comprises a rotary assembly according to one of the preceding claims.

13. A turbomachine, such as a turbojet or a turboprop, **characterized in that** it comprises a rotary assembly according to one of claims 1 to 11.
